# EUROPEAN PATENT SPECIFICATION

(11) **EP 3 739 964 B1**
(45) Date of publication and mention of the grant of the patent: **21.04.2021**
(21) Application number: 19174057.0
(22) Date of filing: 13.05.2019
(51) Int. Cl.: H04W 48/18, H04W 8/12, H04W 8/20

(54) **METHOD AND MOBILE NETWORK FOR DYNAMIC NETWORK STEERING**
VERFAHREN UND MOBILFUNKNETZ ZUR DYNAMISCHEN NETZWERKLENKUNG
PROCÉDÉ ET RÉSEAU MOBILE DE PILOTAGE DE RÉSEAU DYNAMIQUE

(43) Date of publication of application: 18.11.2020
(73) Proprietor: Deutsche Telekom AG, 53113 Bonn (DE)
(72) Inventor: VAN GRONINGEN, Henri, 53340 Meckenheim (DE); PAVLIS, Michal, 53175 Bonn (DE); WILLOWEIT, Benno, 64297 Darmstadt (DE); VON BELOW, Alexander, 50733 Köln (DE); JOPPICH, Andreas, Bonn 53225 (DE)
(74) Representative: Vossius & Partner Patentanwälte Rechtsanwälte mbB

(56) References cited:
- HUAWEI ET AL: "Discussion on PLMN and RAT selection policies for roaming", 3GPP DRAFT; C1-173187, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Krakow (Poland); 20170821 - 20170825 20 August 2017 (2017-08-20), XP051313228, Retrieved from the Internet: URL:http://www.3gpp.org/ftp/Meetings_3GPP_ SYNC/CT1/Docs/ [retrieved on 2017-08-20]
- KPN: "Steering of Roaming: new Key Issue", 3GPP DRAFT; S3-181855 - STEERING OF ROAMING KI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. La Jolla (US); 20180521 - 20180525 18 May 2018 (2018-05-18), XP051457126, Retrieved from the Internet: URL:http://www.3gpp.org/ftp/Meetings%5F3GP P%5FSYNC/SA3/Docs [retrieved on 2018-05-18]
- CT1: "Reply LS on PLMN and RAT selection policies for roaming", 3GPP DRAFT; C6-180045_C1-180761_REPLY LS ON PLMN AND RAT SELECTION POLICIES FOR ROAMING, 3RD GENERATION PARTNERSHIP PROJECT (3GPP), MOBILE COMPETENCE CENTRE ; 650, ROUTE DES LUCIOLES ; F-06921 SOPHIA- , vol. CT WG6, no. Montreal, Canada; 20180227 - 20180302 27 February 2018 (2018-02-27), XP051396678, Retrieved from the Internet: URL:http://www.3gpp.org/ftp/tsg%5Fct/WG6%5 FSmartcard%5FEx%2DT3/CT6%2D87/Documents/Do cs/ [retrieved on 2018-02-27]

## Description

### Field of the invention

The invention relates to a method and a mobile network for Dynamic Network Steering.

### Background

Roaming steering is commonly known as the procedure wherein, for example, a national mobile operator decides to which (foreign) mobile operator, also referred to as a partner, their subscribers will be connected while using roaming.

The current roaming business is structured as follows: a) Operators agree on roaming conditions and service launches (e.g. LTE); b) The Commercial Roaming Broker is a central function entity and negotiate discount agreements on behalf of all involved Broker partners. Commercial Roaming Broker is then entitled to negotiate Inter Operator Discount Agreements with better negotiation "power" and overview over the whole market. The Broker Agreement includes aspects like traffic steering, forecast and settlements.

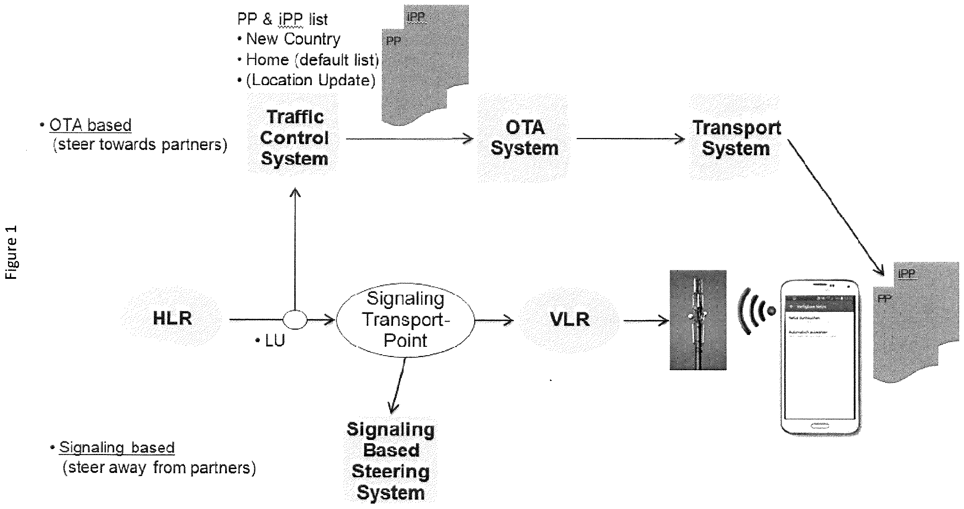

WO 2014/055789 A2 relates to a system and method for providing policy-based roaming updates for a mobile device. The method includes receiving one or more roaming policies from a server, monitoring several parameters of the mobile device for a change in one or more of the several parameters, and evaluating the one or more of the several parameters and the change according to the one or more roaming policies. The method further includes updating a roaming priority list on the mobile device in response to the evaluating, and roaming, after the updating, according to the roaming priority list for establishing a wireless communication. The roaming priority list may include a home network and one or more roaming networks. There are two types of traffic steering: Over The Air (OTA) based method (steer towards partners) and Signaling based method (steer away from partners). These two types of traffic steering are exemplary illustrated and summarized in Figure 1, and described in detail herein below.

### Over The Air (OTA) based method

Referring to upper part of Figure 1, traffic is steered towards a partner from the Traffic Control System (TCS), from the TCS to the Over The Air, OTA, System, and finally from the OTA system to the User Equipment (UE) via the Transport System. More specifically, traffic is steered towards a partner with an Over The Air (OTA) based method that uses dynamic update of country specific Preferred Partner List (PLMN list on SIM card), Inverse Preferred Partner list (FPLMN list on SIM card) and Operator Controlled Preferred Partner list (Operator controlled PLMN list on SIM card, PLMN combined with Access Technology in OPLMNwAct list) with in house developed systems Over the Air (OTA) triggered by the TCS.

Over The Air (OTA) is a solution to remotely push data on a secure element in the SIM card. The basic mechanics of OTA based Roaming Traffic Steering can be summarized as follows:
First, a Location Update (LU) procedure is triggered by the UE (caused by the customer, e.g. the customer has turned on the UE when he/she is abroad or deactivates the flight mode (not in all devices) or crossing the border by car).

Once the LU procedure is completed, the UE scans all frequency bands in the environment and finds all networks available. All found networks are then and put on the 'Found' PLMN List.

Next, the UE tries to register first to the previous used Public Land Mobile Network (PLMN). If the last PLMN is not available, the UE will try to register to the Home PLMN. Further, in the case that the Home Network (i.e. when the MS is abroad) is not available, the UE will read the Preferred Partner (PP) List (also sent after SIM-OTA update).

Thereafter, the Location Update procedure triggers (via signaling) the Traffic Control System (TCS) to send PP and Inverted Preferred Partner (IPP) list to the UE based on a system internal condition algorithm (e.g. when entering a new country or returning to the home country, etc.).

Once the UE has received the PP and IPP lists, the UE tries to register to the networks sent on the PP list and will take the network on position 1. If the network found in the environment is not on the PP list (e.g. no roaming agreement available), the UE takes by chance (not according to signal strength) the next network from the networks found in the environment. The UE then repeats the process as long as it gets the highest possible network on the list. Partners who are on the so-called 'inverted Preferred Partner' (iPP) list are not considered by the UE. However, the user can overrule any PP and iPP list by manually selecting the partner network in the device settings.

Furthermore, the UE will try to connect into a PLMN with a higher priority on the list by a periodic scan of e.g. every 30 minutes (as implemented by Deutsche Telekom, DT), only abroad.

Depending on the availability, the UE can independently change between the radio technologies (LTE/3G/2G) (this can improve or deteriorate UE position, depending on the local coverage situation). The amount or a change of the radio technologies available in a network, is not triggering a new network selection process, only the loss of the network (or the clock signal) causes a new selection of the network.

### Signaling based method

Referring to the below part of Figure 1, the traffic is steered away from a partner with a Signaling based method, where the roaming network could be blocked. Generally, operators (and their subsidiaries) use a system which basic mechanics can be summarized as follows.

The Signaling Based Steering System (e.g. Intelligent Preferred Network (IPN)) processes the Location Update (LU) procedure and interferes in two different ways.

If access is granted it leaves communication over to the Home Location Register (HLR) and the Visitor Location Register (VLR).

If access needs to be rejected the Signaling Based Steering System takes over communication to VLR and UE. There are two ways of "blocking" an access, namely Soft Blocking and/or Hard Blocking.

In Soft Blocking (or soft steering), the Signaling Based Steering System sends, for example, "unexpected data value" which forces the UE to connect to the next available non forbidden PLMN. In case there is no other network available the UE will try X times to register to the same PLMN until the signaling based steering system allow connection (by reaching maximum number of connection attempts within time limit).

In Hard Blocking, the Signaling Based Steering System sends, for example, "roaming not allowed" which triggers the UE to put that network on the Forbidden PLMN (=iPP) List on the SIM card and will not retry to get that network (however, as mentioned before, this can be manually overruled by manual network selection).

From GSM-Release 8 onwards it is possible to transport specific radio network criteria into the Operator controlled PLMN with Access Technology, OPLMNwAct, list. It is available to set Radio Access Technology (RAT) indicator per PP list entry. This means that 2G, 3G or LTE can be assigned as RAT to each PLMN entry in the PP list.

Accordingly, in the above described basic mechanics of the OTA based method, when the Location Update procedure triggers (via signaling) the Traffic Control System (TCS) to send PP and Inverted Preferred Partner (IPP) list to the UE based on a system internal condition algorithm, the UE additionally selects the PLMN/RAT combination with the highest priority from the PP list.

When the UE connects to a PLMN, the following preferences are known: i) "GSM only" (UE logs in into GS); ii) "1:UMTS 2:GSM" (UE logs in, if available, into first UMTS, otherwise into GSM); iii) "GSM/UMTS" (UE can choose itself, whether it logs in into GSM or UMTS); iv) "GSM/UMTS/LTE" (UE can choose for itself whether it logs in into GSM, UMTS or LTE). The "log in" procedure has a higher priority than independent switching between the fastest supported and provided radio technology.

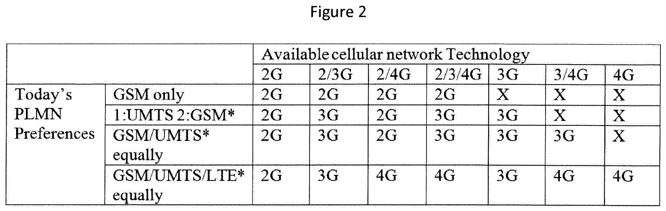

Figure 2 shows the above described roaming steering, which is standardized in 3GPP. As a result, the actual model of Steering of Roaming is mainly focused on commercial goals. Currently, the only technical quality steering parameter is the "general availability" of a mobile radio technology (e.g. LTE). In case LTE is not available while others are, this could lead to a de-prioritized PP list place.

Operators can have more than one partner per country. A Key Performance Indicator (KPI) on the network technologies provided by the partner operator already exists (implemented in current Steering of Roaming) and in a way it is addressing the proposed network coverage KPI needed together with a geographical component in the future.

Huawei et al: "Discussion on PLMN and RAT selection policies for roaming", 20 August 2017, 3GPP Draft C1-173187, as well as CT1: "Reply LS on PLMN and RAT selection policies for roaming", 27 February 2018, 3GPP Draft S3-181855, relate to Public Land Mobile Network and Radio Access Technology selection policies for roaming. KPN: "Steering of Roaming: new Key Issue", 18 May 2018, 3GPP Draft C6-180045_C1-180761_REPLY LS ON PLMN AND RAT SELECTION POLICIES FOR ROAMING, relates to a way for sending information to a home network avoiding potential denial of service and missteering of roaming.

### Technical problem

After the User Equipment, UE, connects to a network abroad and attaches to a foreign Visitor Location Register VLR or the UE connects in the home country to a Home Location Register, HLR, and logs on to the highest ranked network in the PP list as described above, the UE is not always on the highest quality network (see commercial steering). Therefore, this situation creates a negative impact on the user's experience.

### Summary of the invention

In order to solve the above mentioned technical problem, the present invention introduces a new mechanism of dynamic network steering, also referred to as the "Best Network Abroad".

The above objects are achieved by the features of the independent claims.

According to an aspect, the invention provides a method for Dynamic Network Steering in a mobile network, the mobile network comprising a User Equipment, UE, a Mobile Network Scoring System, MNSS, an entitlement server, and an Over The Air, OTA, server, wherein the UE comprises an application module. The method comprising the steps of:
a) forwarding, from the UE to the application module, a UE location update via an Operating System Application Programming Interface, OS API, and waking up the application module;
b) initiating, by the application module, an entitlement request towards the entitlement server to identify a customer with a customer ID;
c) forwarding, by the entitlement server, the customer ID to the MNSS;
d) requesting, from the application module to the UE, for the Mobile Country Code - Mobile Network Code, MCC-MNC, and a current Geo Position (i.e., a geographical position) via OS API and forwarding this information to the MNSS;
e) checking, at the MNSS, by looking into a topology map and comparing Key Performance Indicators, KPI's, if at the current Geo Position there is available a better network, based on the compared KPI's, than the network being currently used,
   wherein if no better network is available, no action is needed,
   wherein if a better network is available:
f) sending, by the MNSS, a request for Steering of Roaming Refresh, SoRR, to the OTA server and sending, by the MNSS, information about a provider of the founded better network available to the application module;
g) generating, at the OTA server, a SoRR message and sending it to the UE, to the better network identified.

According to another aspect, the invention provides a mobile network for Dynamic Network Steering, said mobile network comprising a User

Equipment, UE, a Mobile Network Scoring System, MNSS, an entitlement server and an Over The Air, OTA, server, wherein the UE comprises an application module, wherein:
the UE is configured to forward a UE location update via an Operating System Application Programming Interface, OS API, to the application module and to wake up the application module,
wherein the application module is configured to initiate an entitlement request towards the entitlement server to identify a customer with a customer ID;
the entitlement server is configured to forward the customer ID to the MNSS;
the application module is configured to request, to the UE, for the Mobile Country Code - Mobile Network Code, MCC-MNC, and a current Geo Position via OS API and forwarding all requested information to the MNSS;
the MNSS is configured to check, by looking into a topology map and comparing Key Performance Indicators, KPI's, if at the current Geo Position there is available a better network, based on the compared KPI's, than the network being currently used,
wherein if no better network is available, no action is needed,
wherein if a better network is available,
the MNSS is configured to send a request for Steering of Roaming Refresh, SoRR, to the OTA server and the MNSS is configured to send information about a provider, of the founded better network available, to the application module; the OTA server is configured to generate a SoRR message and to send this message to the UE, to change to the better network identified.

### Brief description of the drawings

In the drawings:
Fig. 1 illustrates an example of two known types of traffic steering.
Fig. 2 illustrates an exemplary table with today's PLMN preferences.
Fig. 3 is a flow chart of the method of the present invention.

### Detailed description of the invention

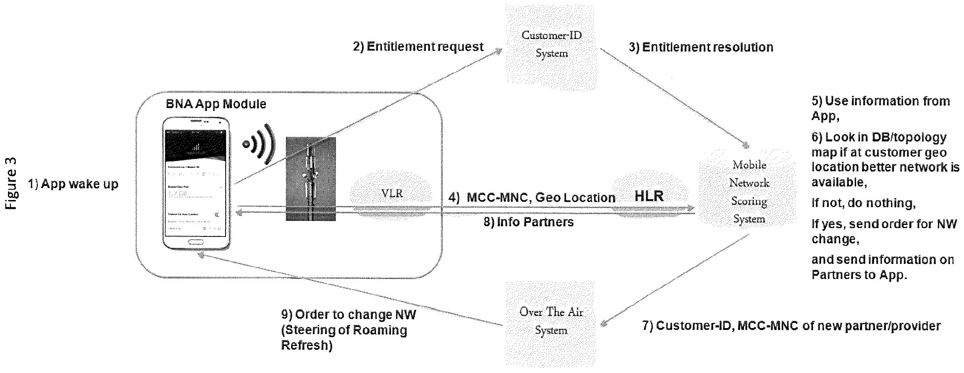

The mechanics of Dynamic Network Steering according to the invention will be described in detail thereafter with reference to Figure 3.

An exemplary scenario of application of the present invention could be when a user travels with a User Equipment, UE, into a European foreign country. In this exemplary case, the Location Update procedure of the SIM card initiates this process once the user has turned on his/her UE or deactivates the flight mode (not in all devices) or crossing a border by car or any other type of transportation.

The mobile network comprises, at least, a User Equipment, UE, a Mobile Network Scoring System, MNSS, an entitlement server and an Over The Air, OTA, server. The method comprises the following steps.

First, the UE location update is forwarded via an Operating System Application Program Interface (OS API) to the Best Network Abroad (BNA) application module or an application module (BNA application module can be part of any app, e.g. connect app or T-Mobile app) and wakes up the application module 1 (in the future this can also be done App-less as all information e.g. the Location Update procedure is also available within the network).

The wake up initiates an entitlement request 2 towards an entitlement server (e.g., Customer-ID System in Figure 3) to resolve the customer ID e.g. Mobile Station International Subscriber Directory Number (MSISDN) and forwards it to the Mobile Network Scoring System (MNSS) 3.

After the entitlement resolution 3 has been received at the MNSS, the application module requests 4 the UE for the Mobile Country Code - Mobile Network Code (MCC-MNC) and a current Geo Position via OS API and forwards this information to the MNSS.

The MNSS compares the currently connected network to all alternative networks at a customer current Geo Position 5, 6 using various network quality indicators (i.e. Download speed, Upload speed, Latency, RAT, signal strength). If, based on the compared KPI's, a better network is identified, this network will be deemed the preferred roaming partner for the UE.

If there is not a better network available, it does not perform any action.

In the other case, if a better network is available, the MNSS will then send 7 a Roaming of Steering Refresh, RoSR, to the OTA server with information about the preferred providers MCC-MNC and Radio-Access Technology for the customer ID.

Further, the MNSS also sends 8 information, about the preferred providers of the founded better network available, to the application module.

Lastly, the Over The Air system (or OTA server) generates a RoSR message and sends 9 it to the UE, to change to the better network identified.

## Claims

1. A method for Dynamic Network Steering in a mobile network, the mobile network comprising a User Equipment, UE, a Mobile Network Scoring System, MNSS, an entitlement server, and an Over The Air, OTA, server, wherein the UE comprises an application module, the method comprising the steps of:
a) forwarding, from the UE to the application module, a UE location update via an Operating System Application Programming Interface, OS API, and waking up (1) the application module;
b) initiating, by the application module, an entitlement request (2) towards the entitlement server to identify a customer with a customer ID;
c) forwarding (3), by the entitlement server, the customer ID to the MNSS;
d) requesting (4), from the application module to the UE, for the Mobile Country Code - Mobile Network Code, MCC-MNC, and a current Geo Position via OS API and forwarding this information to the MNSS;
e) checking (5,6), at the MNSS, by looking into a topology map and comparing Key Performance Indicators, KPI's, if at the current Geo Position there is available a better network, based on the compared KPI's, than the network being currently used,
wherein if no better network is available, no action is needed,
wherein if a better network is available:
f) sending (7), by the MNSS, a request for Steering of Roaming Refresh, SoRR, to the OTA server and sending (8), by the MNSS, information about a provider, of the founded better network available, to the application module;
g) generating, at the OTA server, a SoRR message and sending (9) it to the UE, to change to the better network identified.

2. A mobile network for Dynamic Network Steering, said mobile network comprising a User Equipment, UE, a Mobile Network Scoring System, MNSS, an entitlement server and an Over The Air, OTA, server, wherein the UE comprises an application module, wherein:
the UE is configured to forward a UE location update via an Operating System Application Programming Interface, OS API, to the application module and to wake up the application module,
wherein the application module is configured to initiate an entitlement request towards the entitlement server to identify a customer with a customer ID;
the entitlement server is configured to forward the customer ID to the MNSS;
the application module is configured to request, to the UE, for the Mobile Country Code - Mobile Network Code, MCC-MNC, and a current Geo Position via OS API and forwarding all requested information to the MNSS;
the MNSS is configured to check, by looking into a topology map and comparing Key Performance Indicators, KPI's, if at the current Geo Position there is available a better network, based on the compared KPI's, than the network being currently used,
wherein if no better network is available, no action is needed,
wherein if a better network is available,
the MNSS is configured to send a request for Steering of Roaming Refresh, SoRR, to the OTA server and the MNSS is configured to send information about a provider, of the founded better network available, to the application module;
the OTA server is configured to generate a SoRR message and to send this message to the UE, to change to the better network identified.

## Patentansprüche

1. Verfahren zur dynamischen Netzwerklenkung in einem Mobilfunknetz, wobei das Mobilfunknetz ein Benutzerendgerät, UE, ein Mobilfunknetz-Bewertungssystem, MNSS, einen Berechtigungsserver und einen Über-die-Luft, OTA, Server aufweist, wobei die UE ein Anwendungsmodul aufweist, wobei das Verfahren die Schritte aufweist:
a) Weiterleiten vom UE an das Anwendungsmodul einer UE-Standortaktualisierung über eine Betriebssystem-Anwendungsprogrammierschnittstelle, OS API, und Aufwecken (1) des Anwendungsmoduls;
b) Initiieren durch das Anwendungsmodul einer Berechtigungsanforderung (2) an den Berechtigungsserver, um einen Kunden mit einer Kunden-ID zu identifizieren;
c) Weiterleiten (3) durch den Berechtigungsserver der Kunden-ID an das MNSS;
d) Richten einer Anforderung (4) über die OS API vom Anwendungsmodul an das UE nach dem Mobilfunklandeskennzahl - Mobilfunknetzcode, MCC-MNC, und einer gegenwärtigen Geoposition und Weiterleiten dieser Informationen an das MNSS;
e) Prüfen (5, 6) am MNSS durch Nachschlagen in einer Topologiekarte und Vergleichen von Schlüssel-Leistungsindikatoren, KPIs, ob beruhend auf den verglichenen KPIs an der gegenwärtigen Geoposition ein besseres Netzwerk als das Netzwerk verfügbar ist, das gegenwärtig verwendet wird,
wobei, wenn kein besseres Netzwerk verfügbar ist, keine Aktion erforderlich ist,
wobei, wenn ein besseres Netzwerk verfügbar ist:
f) Senden (7) durch das MNSS einer Anforderung zur Auffrischung der Roaming-Lenkung, SoRR, an den OTA-Server und Senden (8) durch das MNSS von Informationen über einen Anbieter des gefundenen besseren verfügbaren Netzwerks an das Anwendungsmodul;
g) Erzeugen am OTA-Server einer SoRR-Nachricht und Senden (9) der SoRR-Nachricht an das UE, um zu dem identifizierten besseren Netzwerk zu wechseln.

2. Mobilfunknetz zur dynamischen Netzwerklenkung, wobei das Mobilfunknetz ein Benutzerendgerät, UE, ein Mobilfunknetz-Bewertungssystem, MNSS, einen Berechtigungsserver und einen Über-die-Luft, OTA, Server aufweist, wobei das UE ein Anwendungsmodul aufweist, wobei:
das UE konfiguriert ist, eine UE-Standortaktualisierung über eine Betriebssystem-Anwendungsprogrammierschnittstelle, OS API, an das Anwendungsmodul weiterzuleiten und das Anwendungsmodul aufzuwecken,
wobei das Anwendungsmodul konfiguriert ist, eine Berechtigungsanforderung zum Berechtigungsserver zu initiieren, um einen Kunden mit einer Kunden-ID zu identifizieren;
der Berechtigungsserver konfiguriert ist, die Kunden-ID zum MNSS weiterzuleiten;
das Anwendungsmodul konfiguriert ist, an das UE eine Anforderung nach dem Mobilfunklandeskennzahl - Mobilfunknetzcode, MCC-MNC, und einer gegenwärtigen Geoposition über die OS API zu richten und alle angeforderten Informationen an das MNSS weiterzuleiten;
das MNSS konfiguriert ist, durch Nachschlagen in einer Topologiekarte und Vergleichen von Schlüssel-Leistungsindikatoren, KPIs, zu überprüfen, ob beruhend auf den verglichenen KPIs an der gegenwärtigen Geoposition ein besseres Netzwerk als das Netzwerk verfügbar ist, das gegenwärtig verwendet wird,
wobei, wenn kein besseres Netzwerk verfügbar ist, keine Aktion erforderlich ist, wobei, wenn ein besseres Netzwerk verfügbar ist,
das MNSS konfiguriert ist, eine Anforderung zur Auffrischung der Roaming-Lenkung, SoRR, an den OTA-Server zu senden, und das MNSS konfiguriert ist, Informationen über einen Anbieter des gefundenen besseren verfügbaren Netzwerks an das Anwendungsmodul zu senden;
der OTA-Server konfiguriert ist, eine SoRR-Nachricht zu erzeugen und diese Nachricht an das UE zu senden, um zu dem identifizierten besseren Netzwerk zu wechseln.

## Revendications

1. Procédé de pilotage de réseau dynamique dans un réseau mobile, ledit réseau mobile comprenant un équipement d'utilisateur UE, un système de notation de réseau mobile MNSS, un serveur d'attribution et un serveur sans fil OTA, où l'UE comprend un module d'application, ledit procédé comprenant les étapes suivantes :
a) transmission de l'UE au module d'application d'une mise à jour de localisation d'UE par l'intermédiaire d'une interface de programmation d'application API de système d'exploitation OS, et activation (1) du module d'application ;
b) envoi par le module d'application d'une requête de droit (2) au serveur d'attribution pour identifier un client par un identifiant de client ;
c) transmission (3) par le serveur d'attribution de l'identifiant de client au MNSS ;
d) demande (4) transmise par le module d'application à l'UE du code de pays mobile - code de réseau mobile MCC-MNC, et d'une géolocalisation actuelle par l'intermédiaire de l'API OS, et communication de ces informations au MNSS ;
e) vérification (5, 6) au niveau du MNSS, par consultation d'une carte topologique et comparaison d'indicateurs de performances clés KPI, si un réseau meilleur que le réseau actuellement utilisé est disponible pour la géolocalisation actuelle, sur la base des KPI comparés,
où aucune action n'est exigée si aucun réseau meilleur n'est disponible,
où, si un réseau meilleur est disponible :
f) envoi (7) par le MNSS d'une demande de pilotage de rafraîchissement d'itinérance SoRR au serveur OTA, et envoi (8) par le MNSS d'informations sur un fournisseur du réseau meilleur disponible trouvé, au module d'application ;
g) génération d'un message SoRR sur le serveur OTA, et envoi (9) de celui-ci à l'UE pour passer au réseau meilleur identifié.

2. Réseau mobile pour un pilotage de réseau dynamique, ledit réseau mobile comprenant un équipement d'utilisateur UE, un système de notation de réseau mobile MNSS, un serveur d'attribution et un serveur sans fil OTA, où l'UE comprend un module d'application, où :
l'UE est prévu pour transmettre une mise à jour de localisation d'UE par l'intermédiaire d'une interface de programmation d'application API de système d'exploitation OS, API OS, au module d'application et pour activer le module d'application,
où le module d'application est prévu pour envoyer une requête de droit au serveur d'attribution pour identifier un client avec un identifiant de client ;
le serveur d'attribution est prévu pour transmettre l'identifiant de client au MNSS ;
le module d'application est prévu pour demander à l'UE à l'UE le code de pays mobile - code de réseau mobile MCC-MNC, et une géolocalisation actuelle par l'intermédiaire de l'API OS, et communiquer toutes les informations demandées au MNSS ;
le MNSS est prévu pour vérifier, par consultation d'une carte topologique et comparaison d'indicateurs de performances clés KPI, si un réseau meilleur que le réseau actuellement utilisé est disponible pour la géolocalisation actuelle, sur la base des KPI comparés,
où aucune action n'est exigée si aucun réseau meilleur n'est disponible, où, si un réseau meilleur est disponible,
le MNSS est prévu pour envoyer une demande de pilotage de rafraîchissement d'itinérance SoRR au serveur OTA, et le MNSS est prévu pour envoyer au module d'application des informations sur un fournisseur du réseau meilleur disponible trouvé ;
le serveur OTA est prévu pour générer un message SoRR, et pour envoyer ce message à l'UE pour passer au réseau meilleur identifié.
